# DEMANDE DE BREVET EUROPEEN

(11) **EP 0 742 635 A1**
(43) Date de publication de la demande: **13.11.1996**
(21) Numéro de dépôt: 96401020.1
(22) Date de dépôt: 10.05.1996
(51) Int. Cl.: H02K 23/04

(54) **Moteur électrique à aimants permanents, notamment pour véhicule automobile**

(30) Priorité: 11.05.1995 FR 9505596
(71) Demandeur: VALEO SYSTEMES D'ESSUYAGE, 78321 La Verrière (FR)
(72) Inventeur: Gagneux, Georges, 86100 Chatellerault (FR)
(74) Mandataire: Martin, Jean-Jacques

(57) **Abrégé**

Moteur électrique, notamment pour véhicule automobile, comportant une carcasse (4) en un matériau magnétique, au moins deux secteurs aimantés (3) reçus dans ladite carcasse (4), ainsi qu'un induit rotatif (2), les secteurs aimantés (3) présentant une surface intérieure (3a) détalonnée par rapport à l'induit rotatif (2), de sorte que l'entrefer (7) est croissant du milieu des secteurs aimantés (3) vers leurs arêtes, caractérisé en ce que la surface extérieure (3b) des secteurs aimantés (3) est de mêmes centres de courbure que leur surface intérieure (3a), lesdits secteurs aimantés (3) présentant une épaisseur constante sur la majeure partie des arcs selon lesquels ils s'étendent.

## Description

La présente invention est relative aux moteurs électriques à aimants permanents

Elle trouve avantageusement application pour la commande de mécanismes à l'intérieur de véhicules automobiles.

Un moteur électrique à aimants permanents est classiquement constitué :
- d'un stator comportant une carcasse en un matériau magnétique et au moins deux secteurs aimantés, par exemple en ferrite, reçus dans celle-ci,
- d'un induit rotatif présentant une pluralité d'encoches s'étendant parallèlement à son axe et recevant des spires d'un bobinage.

On sait depuis longtemps que l'induction d'un tel moteur subit au cours de la rotation du rotor des fluctuations qui sont fonction de la position des encoches par rapport aux secteurs aimantés. Ce phénomène est à l'origine de bruits dont la fréquence correspond à la fréquence de défilement des encoches devant les secteurs aimantés.

De nombreuses solutions ont déjà été proposées pour atténuer ces bruits indésirables.

Il a notamment déjà été proposé des moteurs dont les encoches sont en biais par rapport à l'axe de leur induit, de sorte que leurs spires ne se présentent que progressivement dans les lignes de force entre les secteurs aimantés.

On pourra par exemple à cet égard se référer à la description qui est faite de moteurs de ce type dans la demande de brevet DE-40 25 754.

Il a également été proposé, en particulier dans FR-2 245 112, de détalonner la carcasse par rapport à la surface externe des secteurs aimantés ou de détalonner la surface intérieure des secteurs aimantés par rapport au rotor, de façon que l'induction à l'intérieur des moteurs soit symétriquement décroissante du milieu des secteurs aimantés vers leurs arêtes.

Le détalonnage de la carcasse par rapport à la surface externe des secteurs aimantés est une solution qui n'est pas mécaniquement satisfaisante.

Quant au détalonnage de la surface intérieure des secteurs aimantés, il était à ce jour réalisé en réduisant l'épaisseur des secteurs aimantés de leur milieu vers leurs arêtes.

Or, cette réduction d'épaisseur se traduit par des pertes de densité de flux importantes.

En outre, elle rend l'usinage des secteurs aimantés difficile, puisque les courbures interne et externe de ces secteurs sont différentes.

La présente invention propose un moteur électrique qui permet de résoudre ces différents inconvénients.

Plus particulièrement, l'invention propose un moteur électrique, notamment pour véhicule automobile, comportant une carcasse en un matériau magnétique, au moins deux secteurs aimantés reçus dans ladite carcasse, ainsi qu'un induit rotatif, les secteurs aimantés présentant une surface intérieure détalonnée par rapport à l'induit rotatif, de sorte que l'entrefer est croissant du milieu des secteurs aimantés vers leurs arêtes, caractérisé en ce que la surface extérieure des secteurs aimantés est de mêmes centres de courbure que leur surface intérieure, lesdits secteurs aimantés présentant une épaisseur constante sur la majeure partie des arcs selon lesquels ils s'étendent.

Comme on l'aura compris, dans une telle structure, les variations d'induction au cours de la rotation du moteur sont atténuées par le détalonnage des secteurs aimantés, sans perte de densité de flux.

En outre, les secteurs aimantés sont d'un usinage aisé, puisque les centres de courbure de leurs surfaces intérieure et extérieure sont identiques.

Dans une variante avantageuse, les secteurs aimantés sont en arc de cylindre, leurs axes étant décalés par rapport a l'axe du rotor.

C'est par ce décalage que l'entrefer est croissant du milieu des secteurs aimantés vers leurs arêtes.

On notera en outre que cette forme cylindrique simplifie considérablement l'usinage des secteurs.

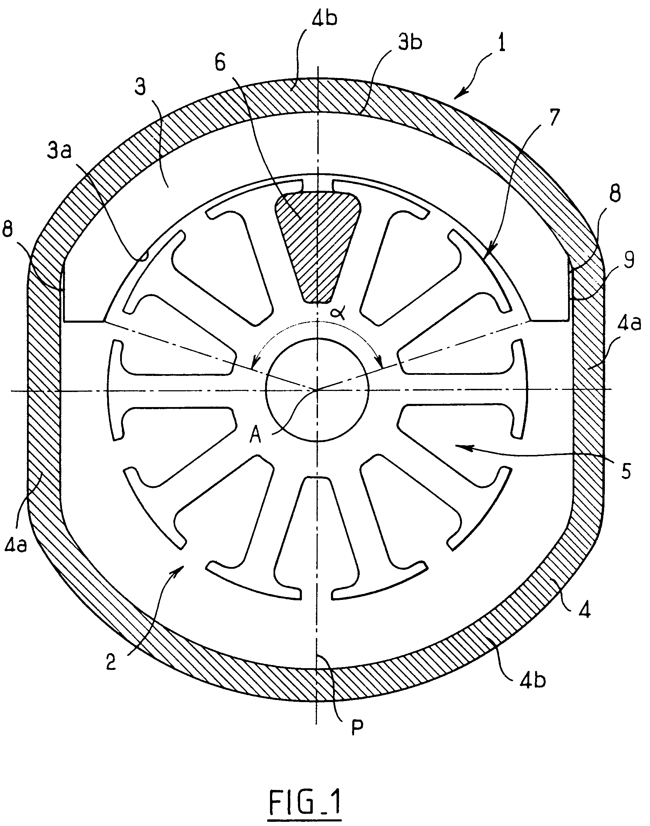

D'autres caractéristiques et avantages ressortiront encore de la description qui suit. Cette description est purement illustrative et non limitative. Elle doit être lue en regard de la figure unique annexée, sur laquelle on a représenté une vue en coupe d'un moteur conforme à un mode de réalisation possible pour l'invention.

Le moteur électrique représenté sur cette figure comporte un stator 1 et un rotor induit 2.

Le stator 1 est constitué d'une carcasse 4 en un matériau métallique et de deux secteurs aimantés 3 en ferrite disposés de façon diamétralement opposée dans ladite carcasse 4.

Le rotor 2 est un induit feuilleté classique. Il présente une pluralité d'encoches 5 s'étendant parallèlement à l'axe A du moteur. Ces encoches 5 reçoivent les spires 6 d'un bobinage.

Les secteurs aimantés 3 - dont un seul a été représenté pour ne pas surcharger la figure - s'étendent chacun par rapport à l'axe A du rotor 2 sur un angle α de 144°.

La surface intérieure 3a des secteurs aimantés 3 est détalonnée par rapport au rotor 2, de sorte que l'entrefer 7 entre le rotor 2 et ces secteurs aimantés 3 croît du milieu de chaque secteur 3 jusque vers ses arêtes.

Ces secteurs aimantés 3 présentent en outre une surface extérieure 3b qui est - sur sensiblement toute la périphérie de ces secteurs - de mêmes centres de courbure que leur surface intérieure 3a. Ces secteurs aimantés 3 sont par conséquent d'épaisseur constante sur sensiblement toute leur périphérie.

La carcasse 4 est conformée pour épouser la forme extérieure des secteurs aimantés 3 sur la majeure partie des arcs selon lesquels ils s'étendent.

Avantageusement, ainsi qu'on l'a illustré sur la figure, les secteurs aimantés 3 présentent au voisinage de leurs arêtes une forme qui accentue la réduction de l'induction au voisinage de ces arêtes.

Par exemple, les surfaces extérieures 3b des secteurs aimantés 3 se terminent au voisinage de ces arêtes par des pans coupés 8 parallèles au plan médian longitudinal P passant par les milieux des secteurs aimantés 3.

Cette forme est particulièrement avantageuse dans le cas de la variante illustrée sur la figure, où les secteurs aimantés 3 sont en arc de cylindre, leurs axes étant décalés par rapport à l'axe du rotor de façon que l'entrefer soit croissant du milieu des secteurs aimantés vers leurs arêtes.

La carcasse 4 est alors conformée avec deux flancs droits 4a parallèles au pans coupés 8 et s'étendant chacun le long de deux pans coupés qui sont du même côté du plan longitudinal P.

Les deux flancs droits 4a relient entre elles deux portions arquées 4b qui épousent la portion des surfaces extérieures des secteurs aimantés 3 entre les pans coupés 8. Ces deux portions arquées sont en arc de cylindre, leurs axes étant décalés par rapport à l'axe du rotor.

Egalement, les pans coupés 8 ne sont pas directement en contact avec le flanc droit 8 auquel ils font face, mais sont séparés dudit flanc droit par un interstice 9, qui contribue à diminuer l'induction au voisinage des arêtes des secteurs aimantés 3.

## Revendications

1. Moteur électrique, notamment pour véhicule automobile, comportant une carcasse (4) en un matériau magnétique, au moins deux secteurs aimantés (3) reçus dans ladite carcasse (4), ainsi qu'un induit rotatif (2), les secteurs aimantés (3) présentant une surface intérieure (3a) détalonnée par rapport à l'induit rotatif (2), de sorte que l'entrefer (7) est croissant du milieu des secteurs aimantés (3) vers leurs arêtes, caractérisé en ce que la surface extérieure (3b) des secteurs aimantés (3) est de mêmes centres de courbure que leur surface intérieure (3a), lesdits secteurs aimantés (3) présentant une épaisseur constante sur la majeure partie des arcs selon lesquels ils s'étendent.

2. Moteur selon la revendication 1, caractérisé en ce que la carcasse (4) métallique est d'une forme telle qu'elle épouse la surface extérieure (3b) des secteurs aimantés (3) sur la majeure partie des arcs selon lesquels ils s'étendent.

3. Moteur selon l'une des revendications précédentes, caractérisé en ce que les secteurs aimantés sont en arc de cylindre, leurs axes étant décalés par rapport à l'axe du rotor.

4. Moteur selon l'une des revendications précédentes, caractérisé en ce que les secteurs aimantés (3) présentent au voisinage de leurs arêtes une forme diminuant l'induction.

5. Moteur selon la revendication 4, caractérisé en ce que la surface externe des secteurs aimantés (3) se termine par des pans coupés (8).

6. Moteur selon la revendication 5 comportant deux secteurs aimantés (3) diamétralement opposés, caractérisé en ce que les pans coupés (8) de ces secteurs aimantés (3) sont parallèles au plan médian longitudinal passant par les milieux de ces secteurs aimantés (3).

7. Moteur selon la revendication 6 prise en combinaison avec la revendication 2, caractérisé en ce que la carcasse (4) présente deux flancs droits (4a) parallèles s'étendant le long des pans coupés des secteurs aimantés (3) et deux portions arquées (4b) qui s'étendent entre ces deux flancs et qui épousent les portions de la surface extérieure des secteurs aimantés (3) entre les pans coupés (8) desdits secteurs (3).

8. Moteur selon la revendication 7, caractérisé en ce qu'un interstice (9) sépare un pan coupé (8) du flanc droit (4a) auquel il fait face.
